# EUROPÄISCHE PATENTSCHRIFT

(11) **EP 2 962 028 B1**
(45) Veröffentlichungstag und Bekanntmachung des Hinweises auf die Patenterteilung: **29.04.2020**
(21) Anmeldenummer: 14707391.0
(22) Anmeldetag: 28.02.2014
(51) Int. Cl.: B60T 17/04, D04B 1/22, F16L 57/06, H02G 3/04, F16L 57/02

(54) **STRICKSCHRUMPFSCHLAUCH UND VERFAHREN ZU DESSEN HERSTELLUNG**
KNITTED HEAT-SHRINK TUBE AND METHOD FOR PRODUCING SAME
GAINE THERMORÉTRACTABLE TRICOTÉE ET PROCÉDÉ DE PRODUCTION

(30) Priorität: 01.03.2013 DE 102013203538
(43) Veröffentlichungstag der Anmeldung: 06.01.2016
(73) Patentinhaber: Fränkische Industrial Pipes GmbH & Co. KG, 97486 Königsberg (DE)
(72) Erfinder: BIERMAIER, Peter, CH-9436 Balgach (CH)
(74) Vertreter: Herzog, Markus
(86) Internationale Anmeldenummer: PCT/EP2014/053948
(87) Internationale Veröffentlichungsnummer: WO 2014/131887

(56) Entgegenhaltungen:
- EP-B1- 0 499 089
- WO-A1-01/84685
- WO-A1-97/48940
- US-B2- 7 823 420

## Beschreibung

Die Erfindung betrifft einen unter Verwendung eines bei Erwärmung schrumpfbaren Garns hergestellten Schutzschlauch.

Bereits an dieser Stelle sei darauf hingewiesen, dass die Materialeigenschaft "bei Erwärmung schrumpfbar" sich nicht auf die unerwünschte Schrumpfung bezieht, den man aus dem Haushalt kennt und der sich beispielsweise einstellt, wenn man ein aus Kunststofffasern hergestelltes Kleidungsstück zu heiß wäscht. Vielmehr nimmt diese Materialeigenschaft auf die erwünschte Schrumpfung Bezug, die der Fachmann von Schrumpfschläuchen her kennt, wie sie beispielsweise zur Isolierung elektrischer Leitungen eingesetzt werden. Um diese Art von Schrumpfbarkeit bereitstellen zu können, muss der Kunststoff erwärmt und im erwärmten Zustand aufgeweitet werden. Durch anschließendes Abkühlen des Kunststoffs unter dessen Glastemperatur wird dieser bezüglich der Rückverformung in den ungedehnten Zustand quasi eingefroren. Bei erneuter Erwärmung auf eine Temperatur oberhalb der Glastemperatur werden die eingefrorenen Spannungen frei und das Material zieht sich im Wesentlichen wieder auf seinen Ausgangszustand zusammen.

Schutzschläuche der eingangs genannten Art werden beispielsweise im Kraftfahrzeugbau, insbesondere zum Schutz von Fluidleitungen, beispielsweise Ladeluftleitungen, Bremsleitungen, Servoleitungen, Kühlwasserleitungen oder dergleichen, sowie Unterdruckleitungen und elektrischen Leitungen vor von außen auf diese einwirkenden mechanischen Einflüssen eingesetzt.

Aus der gattungsbildenden EP 0 906 536 B1 ist ein aus einem Gewebe hergestellter Schutzschlauch bekannt. Bei dem bekannten Gewebeschlauch sind die in Umfangsrichtung verlaufenden Fäden aus einem bei Erwärmung schrumpfbaren Material gefertigt, während die in axialer Richtung verlaufenden Fäden aus einem unter Erwärmung nicht schrumpfbaren Material gefertigt sind. Hierdurch wird dem bekannten Gewebeschlauch die gewünschte anisotrope Schrumpfung verliehen. Während eine Schrumpfung in Umfangsrichtung erwünscht ist, damit sich der Schlauch beim Schrumpfen eng an die zu schützende Leitung anlegt, ist nämlich in axialer Richtung allenfalls eine deutlich geringere Schrumpfung akzeptabel, da diese das Ablängen des ungeschrumpften Schutzschlauch auf das richtige Längenmass erschwert.

An dem bekannten Gewebeschlauch ist ferner dessen Längsnaht nachteilig, die zur Vereinfachung der Herstellung des Gewebeschlauchs vorgesehen wird. Da Rundwebmaschinen eine überaus komplizierte Konstruktion besitzen und in der Anschaffung teuer sind, werden Gewebeschrumpfschläuche in der Praxis nämlich üblicherweise als längliches Gewebeband hergestellt, dessen beide Längsseitenränder anschließend zur Bildung eines Schlauches übereinander gelegt und miteinander verbunden werden, beispielsweise durch Kleben, Schweißen oder dergleichen. Die hierbei gebildete Naht ist insofern nachteilig, als sie die Flexibilität des Schlauchs behindert. Ferner sind Gewebeschläuche bekannt, bei denen zwei Gewebebänder aufeinander gelegt und mittels zweier Nähte miteinander verbunden werden. Auch diese Nähte behindern die Flexibilität des Schlauchs.

Ferner ist aus der US 7 823 420 B2 ein rundgestrickter Schutzschlauch bekannt, der mit einem schrumpfbaren Garn hergestellt ist.

Der Vollständigkeit halber sei zuletzt auch noch auf die WO 01/84685 A1 verwiesen.

Es ist daher Aufgabe der vorliegenden Erfindung, einen in einfacher und kostengünstiger Weise nahtfrei hergestellten Schrumpfschutzschlauch mit anisotropen Schrumpfungseigenschaften bereitzustellen.

Diese Aufgabe wird erfindungsgemäß durch einen Schutzschlauch gemäß Anspruch 1 gelöst, der im Rundstrickverfahren gemäß Anspruch 7 hergestellt ist. Das Rundstrickverfahren hat den Vorteil, dass zur Herstellung des rundgestrickten Schutzschlauchs der Rundstrickmaschine nur ein einziger Faden bzw. nur ein einziges Fadenbündel zugeführt zu werden braucht. Es kann daher in einfacher Weise durchgeführt werden. Überraschenderweise ergibt sich trotz der Tatsache, dass das Strickgarn über seine gesamte Fadenlänge die gleichen Schrumpfungseigenschaften aufweist und es sich somit im Gestrick sowohl in den in Umfangsrichtung verlaufenden Fadenabschnitten als auch in den in axialer Richtung verlaufenden Fadenabschnitten gleich stark zusammenziehen sollte, eine anisotrope Schrumpfung des Strickschlauchs. Er zieht sich bei der Schrumpfung in Umfangsrichtung deutlich stärker zusammen als in Längsrichtung. Besonders überraschend ist dabei die Tatsache, dass sich der Strickschlauch in Umfangsrichtung stärker zusammenzieht, als es der nominellen Schrumpfbarkeit des beim Stricken verwendeten Fadens entspricht. Auf Letzteres wird nachstehend noch detailliert eingegangen werden.

Die Schrumpfbarkeit bei Erwärmung kann eine dem Material, aus dem das Garn hergestellt ist, innewohnende Eigenschaft sein. Beispielsweise kann das Garn oder zumindest dessen bei Erwärmung schrumpfbaren Bestandteile aus bei Erwärmung schrumpfbarem Polyester, schrumpfbarem Polyamid oder schrumpfbarem Polyethylen hergestellt sein.

Ferner kann das Garn wenigstens ein Monofilament und wenigstens ein Multifilament umfassen. Dabei kann das wenigstens eine Multifilament die Blickdichtheit des Gestricks, insbesondere in dessen geschrumpftem Zustand, verbessern, während das wenigstens eine Monofilament die Schutzfunktion des Gestricks verbessern kann. Ferner brauchen nicht alle Filamente des Garns die Eigenschaft der Schrumpfbarkeit bei Erwärmung aufzuweisen. Vielmehr kann es ausreichend sein, wenn wenigstens ein Monofilament oder/und wenigstens ein Multifilament oder/und wenigstens ein Teil der Filamente wenigstens eines Multifilaments diese Eigenschaft aufweist.

Gemäß einem Ausführungsbeispiel kann das Garn zwei Monofilamente und ein Multifilament umfassen, die jeweils aus bei Erwärmung schrumpfbarem Polyester hergestellt sind. Die beiden Monofilamente können dabei beispielsweise einen Durchmesser von etwa 0,18 mm aufweisen, während das Multifilament 280 dtex aufweisen kann. Ferner kann das Multifilament wenigstens 50 Einzelfilamente umfassen.

Da bei Monofilamenten üblicherweise der Durchmesser des Filaments angegeben wird, während bei Multifilamenten üblicherweise der dtex-Wert angegeben wird (dieser Wert gibt das in Gramm ausgedrückte Gewicht eines Multifilaments mit einer Länge von 10.000 m an), benötigt man zusätzlich noch Angaben über das spezifische Gewicht des Materials, aus dem das Multifilament hergestellt ist, um einen "effektiven Fadendurchmesser" des Garns berechnen zu können. Dieser im Zusammenhang mit der vorliegenden Erfindung zur Charakterisierung des Strickgarns verwendete Parameter berechnet sich wie folgt: Aus dem dtex-Wert des Multifilaments bzw. der Multifilamente berechnet man unter Berücksichtigung des spezifischen Gewichts des Filament-Materials eine effektive Querschnittsfläche des Multifilaments bzw. der Multifilamente. Daraufhin addiert man die Werte der Querschnittsflächen sämtlicher Monofilamente und Multifilamente des Garns auf und berechnet anschließend den Durchmesser einer Kreisfläche, deren Flächeninhalt gleich dem Summenwert ist. Der so berechnete Durchmesser ist der "effektive Fadendurchmesser" des Garns. Es versteht sich, dass dieser Wert ein hypothetischer Wert ist, da es Garne geben kann, deren Filamente im Querschnitt nicht kreisscheibenförmig angeordnet werden können. Beispielsweise ergibt sich für ein aus Polyester gefertigtes Garn, das zwei Monofilamente mit einem Durchmesser von jeweils 0,18 mm und ein Multifilament mit 280 dtex aufweist, unter Berücksichtigung einer spezifischen Dichte von Polyester von 1,38 g/cm³ ein effektiver Fadendurchmesser von 0,30 mm. Dabei sieht man leicht ein, dass die beiden nebeneinander angeordneten Monofilamente eine Erstreckung von 0,36 mm aufweisen und somit eine Kreisfläche von 0,30 mm Durchmesser nicht erzielt werden kann. Gleichwohl hat es sich gezeigt, dass der wie vorstehend angegeben definierte effektive Fadendurchmesser ein für die Beschreibung des Strickgarns aussagekräftiger Parameter ist, da das Garn an den Bindungsstellen des Gestricks aufgrund der Wechselwirkung der beiden dort aneinander anliegenden Fadenabschnitte ohnehin zur Abflachung neigt. Als weiteres Beispiel ergibt sich für ein aus Polyester gefertigtes Garn, das ein Monofilament mit einem Durchmesser von 0,18 mm und ein Multifilament mit 280 dtex aufweist, unter Berücksichtigung einer spezifischen Dichte von Polyester von 1,38 g/cm³ ein effektiver Fadendurchmesser von 0,19 mm.

Allgemein ist es bevorzugt, wenn der effektive Durchmesser zwischen 0,15 mm und 0,40 mm beträgt.

Um das Maß der erwünschten Schrumpfung in Umfangsrichtung erhöhen zu können, ist gemäß einer ersten Alternative vorgesehen, dass im ungeschrumpften Zustand des Gestricks das Verhältnis der Länge der Maschenperiode in Umfangsrichtung des Gestricks zur Differenz der in Umfangsrichtung gemessenen Außenweite der schmaleren Maschen minus dem effektiven Fadendurchmesser zwischen 1,49 und 1,78 beträgt, vorzugsweise zwischen 1,54 und 1,70. Bei geringeren Werten wird die Schrumpfung in Umfangsrichtung durch die seitliche Anlage benachbarter Maschen ein und derselben Maschenreihe behindert, während bei größeren Werten das Gestrick instabil wird, so dass sich die Maschen in die Länge ziehen und sich der Abstand der Maschenreihen in Längsrichtung des Strickschlauchs vergrößert.

Gemäß einer zweiten Alternative der Erfindung, die gemeinsam mit der ersten Alternative vorliegen kann, beträgt zur Minderung der unerwünschten Schrumpfung in Längsrichtung des Strickschlauchs das Verhältnis der Länge der Maschenperiode in Längsrichtung des Gestricks zur Differenz der in Umfangsrichtung gemessenen Außenweite der schmaleren Maschen minus dem effektiven Fadendurchmesser im ungeschrumpften Zustand des Gestricks zwischen 0,65 und 0,76. Hierdurch folgen die Maschenreihen in Längsrichtung des Strickschlauchs so eng aufeinander, dass die von den Maschen einer betrachteten Maschenreihe gebundenen Fäden der vorhergehenden und der nächstfolgenden Maschenreihen entweder bereits im ungeschrumpften Zustand des Strickschlauchs aneinander anliegen oder zumindest im Verlauf des Schrumpfens zur Anlage aneinander kommen und dadurch die Schrumpfung bzw. die weitere Schrumpfung in Längsrichtung zumindest behindern, wenn nicht gar vollständig verhindern.

Zusätzlich oder alternativ kann die Schrumpfung des Strickschlauchs in Längsrichtung auch dadurch behindert werden, dass man das Gestrick mittels eines Lacks, vorzugsweise eines Wasser als Lösungsmittel verwendenden Lacks, überzieht. Der Lack verstärkt die Wechselwirkung der aneinander anliegenden Fäden an den vier Bindungsstellen jeder Masche und behindert damit eine durch das Schrumpfen hervorgerufene Relativbewegung dieser Fäden.

Zusätzlich oder alternativ kann die Schrumpfung des Strickschlauchs in Längsrichtung ferner dadurch behindert werden, dass man auf seiner Außenoberfläche oder/und seiner Innenoberfläche an wenigstens einer Stelle, vorzugsweise wenigstens zwei, einander beispielsweise diametral gegenüber liegenden, Stellen, seines Umfangs einen Streifen aus einem bei Erwärmung nicht schrumpfbaren Material anordnet. Der Streifen kann beispielsweise faden- oder bandartig ausgebildet sein, und beispielsweise aus Silikon hergestellt sein.

Festzuhalten ist, dass sich im Rahmen der Erläuterung der vorliegenden Erfindung sämtliche Werteangaben zu Abmessungsparametern der Maschen des Gestricks als Mittelwerte einer Vielzahl von Maschen verstehen.

Gemäß einem weiteren Gesichtspunkt betrifft die vorliegende Erfindung ein Verfahren zur Herstellung eines erfindugsgemäßen Schutzschlauchs unter Verwendung einer Rundstrickmaschine.

Dabei beträgt das Verhältnis der Nadelbreite der Nadeln der Rundstrickmaschine zu dem von Nadelmitte zu Nadelmitte gemessenen Nadelabstand der Nadeln zwischen 0,31 bis 0,37, vorzugsweise zwischen 0,33 und 0,34.

Und schließlich hat es sich als vorteilhaft erwiesen, wenn der Durchmesser des Nadelkreises der Rundstrickmaschine um zwischen etwa ein Viertel und etwa die Hälfte, vorzugsweise etwa ein Drittel, größer ist als der Durchmesser des Schutzschlauchs in einem von der Rundstrickmaschine abgezogenen und ungeschrumpften Zustand.

Nachzutragen ist noch, dass aus der EP 0 499 089 B1 ein als Strickschlauch ausgebildeter Schutzschlauch bekannt ist. Um ein enges Anliegen des Strickschlauchs an der zu schützenden Leitung sicherzustellen, schlägt diese Druckschrift jedoch vor, das Gestrick aus gummielastischen Material herzustellen oder zumindest gummielastisches Material in das Garn einzubetten.

Die Erfindung wird im Folgenden anhand der beigefügten Zeichnung an einem Ausführungsbeispiel näher erläutert werden. Es stellt dar:
- Figur 1: einen vergrößerten Ausschnitt eines Teils des Gestricks; und
- Figur 2: eine schematische Perspektivansicht des erfindungsgemäßen Strickschlauchs.

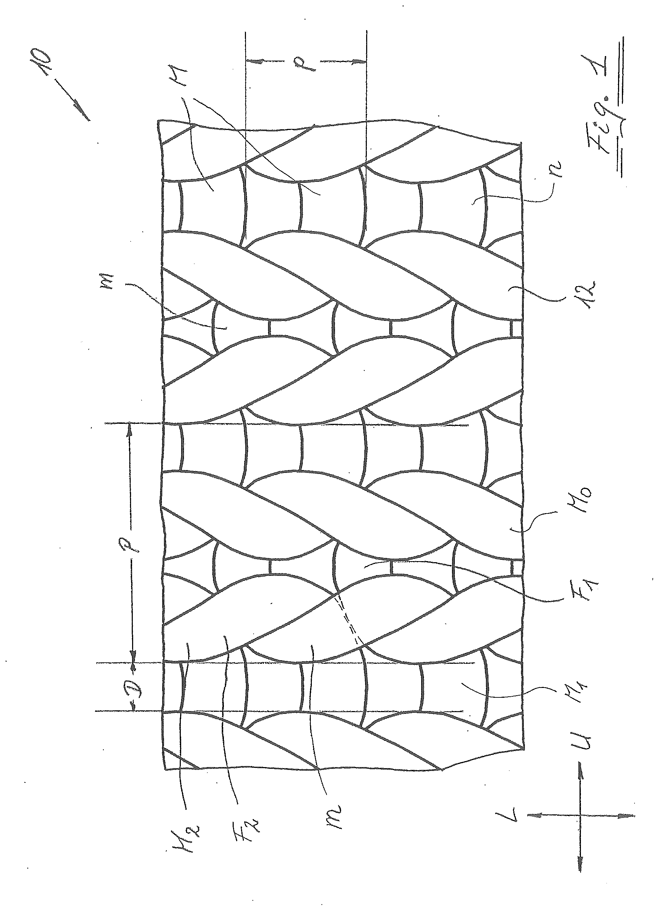

Figur 1 zeigt ein auf einer Rundstrickmaschine hergestelltes Gestrick 10. Das zur Herstellung des Gestricks 10 verwendete Garn 12 umfasste zwei Monofilamente aus Polyester mit jeweils 0,18 mm Durchmesser und ein Multifilament aus Polyester mit 280 dtex. Unter Berücksichtigung eines spezifischen Gewichts von Polyester von 1,38 g/cm³ ergibt sich daraus ein effektiver Fadendurchmesser von 0,30 cm.

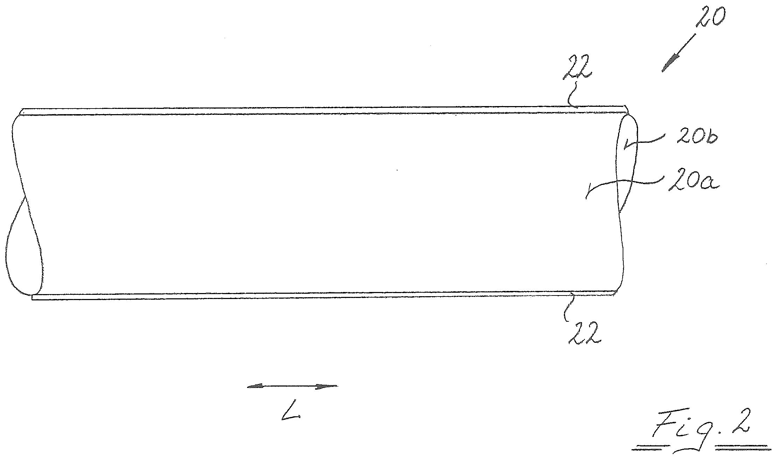

Dieses Garn wurde auf einer einfonturigen Rundstrickmaschine zu einem Strickschlauch 20 (siehe grobschematisch in Figur 2) verstrickt. Die Nadeln der Rundstrickmaschine hatten eine Breite von 0,90 mm und einen von Nadelmitte zu Nadelmitte gemessenen Nadelabstand von 2,65 mm. Nach dem Abziehen von der Rundstrickmaschine hatte der Strickschlauch im nicht geschrumpften Zustand einen Durchmesser von etwa 30 mm. In Längsrichtung L folgten die Maschenreihen M des Gestricks mit einer Periode p von etwa 0,9 mm aufeinander. Die Maschenperiode P in Umfangsrichtung U betrug etwa 1,8 mm, und der Abstand D der in Umfangsrichtung benachbarten schmalen Maschen m betrug etwa 0,27 mm.

Zu dem Begriff "schmale Masche" sei angemerkt, dass man dann, wenn man Figur 1 um 180° dreht, das Gestrick 10 auch als von in dichter Aufeinanderfolge angeordneten breiten Maschen n gebildet ansehen könnte, deren Maschenkopf von dem den Abstand D der schmalen Maschen m bildenden Fadenabschnitt gebildet ist.

Wie in Figur 1 gestrichelt dargestellt ist, liegen in dem Gestrick 10 die von einer schmalen Masche m einer betrachteten Maschenreihe M₁ gebundenen Fadenabschnitte F₁ der vorhergehenden Maschenreihe M₀ und F₂ der nächstfolgenden Maschenreihe M₂ bereits im ungeschrumpften Zustand aneinander an. Beim Erwärmen des Gestricks 10 widersetzen sie sich daher der Schrumpfung in Längsrichtung L, während in Umfangsrichtung U eine Schrumpfung aufgrund der freien Fadenlängen zwischen benachbarten Maschen ohne Weiteres möglich ist. Durch Erwärmen kann der Strickschlauch 20 in Umfangsrichtung U daher auf einen Durchmesser von etwa 20 mm schrumpfen.

Der vorstehend beschriebene Schutzschlauch 20 wurde auf einer Rundstrickmaschine mit 48 Nadeln hergestellt, die jeweils eine Nadelbreite von etwa 0,9 mm und einen von Nadelmitte zu Nadelmitte gemessenen Nadelabstand von etwa 2,65 mm aufwiesen.

Wie in Figur 2 angedeutet ist, kann auf der Außenumfangsfläche 20a des Strickschlauchs 20 an wenigstens zwei Stellen, die einander vorzugsweise diametral gegenüberliegen, jeweils ein Streifen 22 aus einem bei Erwärmung nicht schrumpfbaren Material angeordnet sein, um die Schrumpfung des Strickschlauchs 20 in Längsrichtung L zu behindern. Analoge Schrumpfungsbehinderungsstreifen können auch auf der Innenoberfläche 20b des Strickschlauchs 20 angeordnet werden.

## Patentansprüche

1. Unter Verwendung eines bei Erwärmung schrumpfbaren Garns hergestellter Schutzschlauch (20), welcher im Rundstrickverfahren hergestellt ist,
**dadurch gekennzeichnet, dass** im ungeschrumpften Zustand des Gestricks das Verhältnis (P / M - Ø_{eff}) der Länge der Maschenperiode (P) in Umfangsrichtung des Gestricks (10) zur Differenz (M - Ø_{eff}) der in Umfangsrichtung gemessenen Außenweite (M) der schmaleren Maschen minus dem effektiven Fadendurchmesser (Ø_{eff}) zwischen 1,49 und 1,78 beträgt, vorzugsweise zwischen 1,54 und 1,70, oder/und dass im ungeschrumpften Zustand des Gestricks das Verhältnis (p / M - Ø_{eff}) der Länge der Maschenperiode (p) in Längsrichtung des Gestricks (10) zur Differenz (M - Ø_{eff}) der in Umfangsrichtung gemessenen Außenweite (M) der schmaleren Maschen minus dem effektiven Fadendurchmesser (Ø_{eff}) zwischen 0,65 und 0,76 beträgt.

2. Schutzschlauch nach Anspruch 1,
**dadurch gekennzeichnet, dass** das Garn einen effektiven Fadendurchmesser (Ø_{eff}) von zwischen 0,15 mm und 0,40 mm aufweist.

3. Schutzschlauch nach einem der Ansprüche 1 oder 2,
**dadurch gekennzeichnet, dass** das Garn wenigstens ein Monofilament und wenigstens ein Multifilament umfasst.

4. Schutzschlauch nach Anspruch 3,
**dadurch gekennzeichnet, dass** wenigstens ein Monofilament und/oder wenigstens ein Multifilament oder/und wenigstens ein Teil der Filamente wenigstens eines Multifilaments aus bei Erwärmung schrumpfbarem Polyester hergestellt ist.

5. Schutzschlauch nach einem der Ansprüche 1 bis 4,
**dadurch gekennzeichnet, dass** das Gestrick (10) mittels eines Lacks, vorzugsweise eines Wasser als Lösungsmittel verwendenden Lacks, überzogen ist.

6. Schutzschlauch nach einem der Ansprüche 1 bis 5,
**dadurch gekennzeichnet, dass** man auf seiner Außenoberfläche (20a) oder/und seiner Innenoberfläche (20b) an wenigstens einer Stelle, vorzugsweise wenigstens zwei, einander beispielsweise diametral gegenüber liegenden, Stellen, seines Umfangs einen Streifen (22) aus einem bei Erwärmung nicht schrumpfbaren Material angeordnet ist.

7. Verfahren zur Herstellung eines Schutzschlauchs nach einem der Ansprüche 1 bis 6, wobei der Schutzschlauch (20) auf einer Rundstrickmaschine hergestellt wird,
**dadurch gekennzeichnet, dass** das Verhältnis der Nadelbreite der Nadeln der Rundstrickmaschine zu dem von Nadelmitte zu Nadelmitte gemessenen Nadelabstand der Nadeln zwischen 0,31 bis 0,37 beträgt, vorzugsweise zwischen 0,33 und 0,34.

8. Verfahren nach Anspruch 7,
**dadurch gekennzeichnet, dass** der Durchmesser des Nadelkreises der Rundstrickmaschine um zwischen etwa ein Viertel und etwa die Hälfte, vorzugsweise etwa ein Drittel, größer ist als der Durchmesser des Schutzschlauchs in einem von der Rundstrickmaschine abgezogenen und ungeschrumpften Zustand.

## Claims

1. Protective tube (20) produced using a heat-shrinkable yarn, which tube is produced using a circular knitting method, **characterised in that**, in the non-shrunk state of the knitted fabric, the ratio (P / M - Ø_{eff}) of the length of the stitch period (P) in the circumferential direction of the knitted fabric (10) to the difference (M - Ø_{eff}) of the outer width (M) of the narrower stitches, measured in the circumferential direction, minus the effective thread diameter (Ø_{eff}), is between 1.49 and 1.78, preferably between 1.54 and 1, 70, and/or **in that**, in the non-shrunk state of the knitted fabric, the ratio (p / M - Ø_{eff}) of the length of the stitch period (p) in the longitudinal direction of the knitted fabric (10) to the difference (M-Ø_{eff}) of the outer width (M) of the narrower stitches, measured in the circumferential direction, minus the effective thread diameter (Ø_{eff}), is between 0.65 and 0.76.

2. Protective tube according to claim 1, **characterised in that** the yarn has an effective thread diameter (Ø_{eff}) of between 0.15 mm and 0.40 mm.

3. Protective tube according to either claim 1 or 2, **characterised in that** the yarn comprises at least one monofilament and at least one multifilament.

4. Protective tube according to claim 3, **characterised in that** at least one monofilament and/or at least one multifilament and/or at least some of the filaments of at least one multifilament are produced from heat-shrinkable polyester.

5. Protective tube according to any of claims 1 to 4, **characterised in that** the knitted fabric (10) is coated by a varnish, preferably a varnish that uses water as a solvent.

6. Protective tube according to any of claims 1 to 5, **characterised in that** a strip (22) made of a material that is not heat-shrinkable is arranged on an outer surface (20a) and/or an inner surface (20b) of said tube at at least one point, preferably at least two, for example diametrically opposite, points, on the circumference of said tube.

7. Method for producing a protective tube according to any of claims 1 to 6, the protective tube (20) being produced on a circular knitting machine, **characterised in that** the ratio of the needle width of the needles of the circular knitting machine to the needle spacing of the needles, measured from the needle centre to needle centre, is between 0.31 to 0.37, preferably between 0.33 and 0.34.

8. Method according to claim 7, **characterised in that** the diameter of the needle circle of the circular knitting machine is greater by between approximately a quarter and approximately half, preferably by approximately a third, than the diameter of the protective tube in a state in which said tube is removed from the circular knitting machine and is not shrunk.

## Revendications

1. Tube de protection (20) produit en utilisant un fil thermo-rétractable qui est fabriqué par un procédé de tricotage circulaire,
**caractérisé en ce que,** à l'état non rétracté du tricot, le rapport (P / M - Ø_{eff}) de la longueur de la période de maille (P) dans la direction circonférentielle du tricot (10) à la différence (M - Ø_{eff}) de la largeur extérieure (M) mesurée dans la direction circonférentielle des mailles plus étroites moins le diamètre effectif du fil (Ø_{eff}) est compris entre 1,49 et 1,78, de préférence entre 1,54 et 1,70, ou/et qu'à l'état non rétracté du tricot, le rapport (p / M - Ø_{eff}) de la longueur de la période de maille (p) dans la direction longitudinale du tricot (10) à la différence (M - Ø_{eff}) de la largeur extérieure (M) des mailles plus étroites mesurée dans la direction circonférentielle moins le diamètre effectif de fil (Ø_{eff}) est compris entre 0,65 et 0,76.

2. Tube de protection selon la revendication 1,
**caractérisé en ce que** le fil a un diamètre effectif de fil (Ø_{eff}) compris entre 0,15 mm et 0,40 mm.

3. Tube de protection selon l'une des revendications 1 ou 2,
**caractérisé en ce que** le fil comprend au moins un monofilament et au moins un multifilament.

4. Tube de protection selon la revendication 3,
**caractérisé en ce qu'**au moins un monofilament et/ou au moins un multifilament et/ou au moins une partie des filaments d'au moins un multifilament sont en polyester thermo-rétractable.

5. Tube de protection selon l'une des revendications 1 à 4,
**caractérisé en ce que** le tricot (10) est enduit au moyen d'une laque, de préférence une laque utilisant l'eau comme solvant.

6. Tube de protection selon l'une quelconque des revendications 1 à 5,
**caractérisé en ce qu'**une bande (22) d'un matériau non thermo-rétractable est disposée sur sa surface extérieure (20a) et/ou sa surface intérieure (20b) en au moins un point, de préférence en au moins deux points, par exemple diamétralement opposés, sur sa circonférence.

7. Procédé de fabrication d'un tube de protection selon l'une des revendications 1 à 6, le tube de protection (20) étant fabriqué sur une machine à tricoter circulaire,
**caractérisé en ce que** le rapport entre la largeur des aiguilles de la machine à tricoter circulaire et la distance entre les aiguilles, mesurée du centre de l'aiguille au centre de l'aiguille, est compris entre 0,31 et 0,37, de préférence entre 0,33 et 0,34.

8. Procédé selon la revendication 7,
**caractérisé en ce que** le diamètre du cercle d'aiguilles de la machine à tricoter circulaire est supérieur d'environ un quart à environ la moitié, de préférence d'environ un tiers, au diamètre du tube protecteur dans un état retiré de la machine à tricoter circulaire et non rétracté.
